# FASCICULE DE BREVET EUROPEEN

(11) **EP 2 286 541 B1**
(45) Date de publication et mention de la délivrance du brevet: **06.06.2012**
(21) Numéro de dépôt: 09761885.4
(22) Date de dépôt: 04.05.2009
(51) Int. Cl.: H04L 9/32

(54) **Procédé et dispositif d'émission de messages pour garantir l'authenticité d'un système et procédé et dispositif de vérification de l'authenticité d'un tel système**
Verfahren und Vorrichtung zum Senden von Nachrichten zur Gewährleistung der Authentizität eines Systems und Verfahren und Vorrichtung zum Prüfen der Authentizität eines solchen Systems
Method and device for emitting messages for guaranteeing the authenticity of a system and method and device for verifying the authenticity of such a system

(30) Priorité: 19.05.2008 FR 0802694
(43) Date de publication de la demande: 23.02.2011
(73) Titulaire: EADS Secure Networks, 78990 Elancourt (FR)
(72) Inventeur: CURABET, Dominique, F-75014 Paris (FR); ROUSSEAU, Frédéric, F-78180 Montigny Le Bretonneux (FR)
(74) Mandataire: Lebkiri, Alexandre
(86) Numéro de dépôt international: PCT/FR2009/050809
(87) Numéro de publication internationale: WO 2009/150334

(56) Documents cités:
- CACHIN C ED - INSTITUTE OF ELECTRICAL AND ELECTRONICS ENGINEERS: "Distributing trust on the Internet" PROCEEDINGS INTERNATIONAL CONFERENCE ON DEPENDABLE SYSTEMS AND NETWORKS. DSN 2001. G TEBORG, SWEDEN, JULY 1 - 4, 2001; [INTERNATIONAL CONFERENCE ON DEPENDABLE SYSTEMS AND NETWORKS], LOS ALAMITOS, CA : IEEE COMP. SOC, US, 1 janvier 2001 (2001-01-01), pages 183-192, XP031172809 ISBN: 978-0-7695-1101-6
- REITER M K; BIRMAN K P: "How to securely replicate services" ACM TRANSACTIONS ON PROGRAMMING LANGUAGES AND SYSTEMS, vol. 16, no. 3, mai 1994 (1994-05), pages 986-1009, XP002506153 USA ISSN: 0164-0925

## Description

L'invention concerne un procédé et un dispositif d'émission de messages pour garantir l'authenticité d'un système ayant émis lesdits messages, ainsi qu'un procédé et un dispositif de vérification de l'authenticité d'un système ayant émis des messages. En particulier, l'invention s'applique notamment aux systèmes de radionavigation et aux systèmes de radiocommunications.

Il existe de nombreux systèmes critiques comportant une pluralité d'émetteurs diffusant simultanément différents signaux. Des récepteurs adaptés reçoivent et utilisent, dans leur mode de fonctionnement normal, une pluralité de ces signaux émis par une partie des émetteurs à un instant donné. A titre d'exemple, on peut citer les systèmes de radiocommunications professionnelles à cellules isofréquences (soit en anglais « simulcast trunked radio systems»), les systèmes de diffusion vidéo numérique (soit en anglais « DVB » pour « Digital Vidéo Broadcasting ») ou encore les systèmes de transpondeurs comme le système de surveillance dépendante automatique en mode diffusion ( ou selon l'expression anglo-saxonne « Automatic Dependent Surveillance - Broadcast » ). Les infrastructures terrestres de radionavigation, telles que le système LORAN (acronyme anglo-saxon pour « LOng RAnge Navigation »), qui diffusent sur un canal de données (généralement désigné par son acronyme anglo-saxon « LDC » pour « Low Data Channel » ou « EUROFIX » selon les différentes versions) des signaux sur des porteuses VHF, utilisent aussi une pluralité d'émetteurs diffusant simultanément des signaux. On peut encore citer les systèmes globaux de navigation par satellites comme le système de positionnement global ( plus communément désigné par le sigle anglo-saxon de « GPS » pour « Global Positionning System » ). Plus particulièrement, dans les systèmes de radionavigation par satellites utilisant le service européen de navigation par recouvrement géostationnaire (ou en anglais « EGNOS » pour « European Geostationary Navigation Overlay Service »), des balises radio sont diffusées de manière à ce qu'un récepteur puisse déterminer les paramètres de puissance du signal et de distance ainsi que des signaux de navigation lui permettant de calculer sa position, sa vitesse, et le temps absolu. Ces données sont susceptibles d'être corrompues par des moyens de brouillage et/ou de falsification, voire simplement dégradées par le bruit et les interférences.

Pour garantir un niveau de sécurité adapté à la criticité de l'application, il est connu d'utiliser une combinaison de techniques cryptographiques protégeant les canaux de transmission (généralement désigné par le sigle anglo-saxon « TRANSEC » pour « TRANSmission SECurity ») et/ou de techniques cryptographiques protégeant les données transmises (généralement désignés par le sigle anglo-saxon «INFOSEC » pour « INFOrmation SECurity » ou « COMSEC » pour « COMmunication SECurity »). Par exemple, le service public régulé du système de radionavigation par satellites GALILEO utilise un procédé d'étalement de spectre basé sur une séquence de code généré à partir d'une clé cryptographique (TRANSEC) et un procédé de chiffrement des messages de navigation (COMSEC).

Cependant, ces moyens de protection ne garantissent qu'un ensemble de signaux provient bien d'un ensemble d'émetteurs authentiques appartenant au système qu'au prix de la transmission d'une quantité d'information additionnelle d'authentification relativement importante par rapport à la bande passante disponible (de l'ordre de 320 bits de signature non répudiable par message dans un système de radionavigation qui peut être à débit de 50 bit/s, utilisant de la cryptographie asymétrique, tel que le service de sûreté vitale ( ou « safety of life » en anglais ) - du système de radionavigation par satellites GALILEO), ou bien au prix de la transmission d'information additionnelle d'authentification courte mais associée à un secret partagé par tous les récepteurs et par les émetteurs, la preuve associée à ce secret ne pouvant alors pas être démontrée à des tiers sans dévoiler ledit secret à ces tiers (dans un système utilisant de la cryptographie symétrique tel que le système de radionavigation par satellites GALILEO assurant un service commercial et un service public régulé). Il n'est donc pas possible dans l'art antérieur de créer une chaîne de confiance efficace dans un système à faible bande passante permettant de prouver à des tiers que les messages reçus par un récepteur du système sont garantis de provenir d'émetteurs authentiques du système.

L'invention a notamment pour but de pallier les inconvénients précités. A cet effet, l'invention a pour objet un procédé d'émission de messages pour garantir l'authenticité du système ayant émis lesdits messages MSG.

D'autres caractéristiques et avantages de l'invention apparaîtront plus clairement à la lecture de la description qui suit en regard des dessins annexés qui représentent :
- figure 1a, un synoptique d'un procédé selon l'invention d'émission de messages pour garantir l'authenticité d'un système ayant émis lesdits messages ;
- figure 1b, un synoptique d'un procédé selon l'invention de vérification de l'authenticité d'un système ayant émis des messages ;
- figure 2, un schéma d'un système comportant des dispositifs d'émission selon l'invention et un dispositif selon l'invention de vérification de l'authenticité d'un système ayant émis des messages.

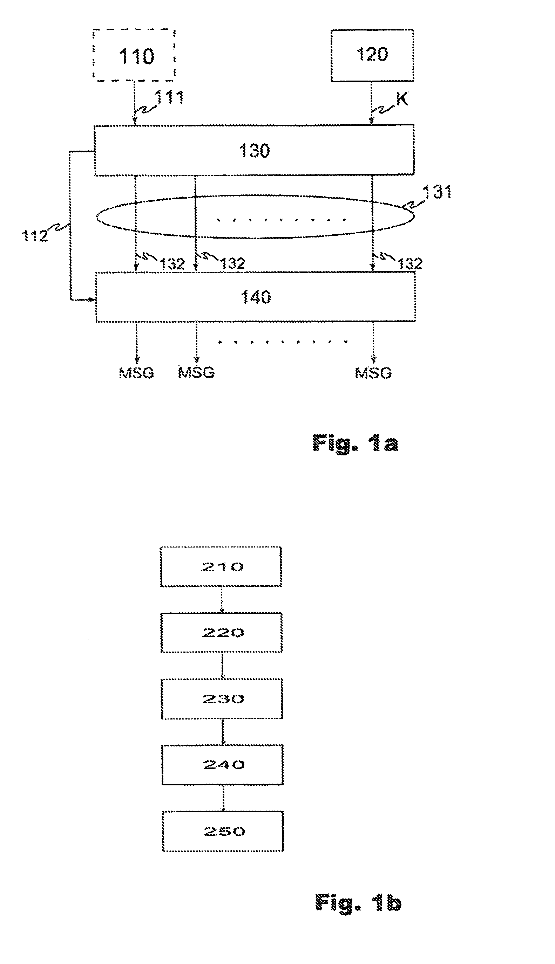

La figure 1a illustre, par un synoptique, un procédé selon l'invention d'émission de messages pour garantir l'authenticité d'un système ayant émis lesdits messages. Le procédé d'émission selon l'invention peut optionnellement comporter une première étape 110 de génération d'un couple clé publique 111, clé privée 112. La génération d'un couple de clé publique /clé privée est bien connue de l'homme du métier, comme base de la cryptographie asymétrique depuis l'invention de l'algorithme RSA par Rivest, Shamir et Adlerman en 1978. Alternativement, le couple clé publique 111, clé privée 112 peut être reçu comme une entrée du procédé d'émission selon l'invention, ou être un paramètre configurable du procédé d'émission selon l'invention.

Dans une deuxième étape (120) du procédé selon l'invention, une valeur de seuil K est choisie. Cette valeur de seuil K est un entier naturel au moins égal à 1. Plus la valeur de seuil K est grande, plus les traitements nécessaires à un dispositif recevant les messages pour générer une preuve pourront être importants, toute chose étant égale par ailleurs ; plus la valeur de seuil K est grande, plus la bande passante nécessaire à l'authentification par émetteur est faible : il convient donc d'adapter cette valeur de seuil K en tenant compte de ces paramètres et des contraintes pesant sur le dispositif mettant en oeuvre le procédé d'émission selon l'invention et sur le dispositif mettant en oeuvre le procédé de vérification selon l'invention.

Dans une troisième étape 130 du procédé selon l'invention, un ensemble 131 d'informations partielles 132 est généré, soit à partir de la clé publique 111, soit à partir de la clé privée 112 selon le schéma cryptographique à seuil choisi. Dans la présente description, le terme clé doit être compris dans son acceptation la plus large, comprenant par exemple la clé et ses attributs éventuels, et/ou une clé scellée (« sealed key » en anglais), et/ou un certificat de clé.

Selon une première modalité de génération utilisant la clé publique 111, ces informations partielles permettent de reconstituer la clé publique 111 elle-même, ces informations partielles 132 sont alors des clés partielles.

Selon une seconde modalité de génération utilisant la clé privée112 selon le schéma cryptographique à seuil choisi, ces informations partielles permettent de reconstituer une signature associée à un message MSG, ladite signature pouvant être vérifiée avec la clé publique 111 supposée connue.

Une méthode de génération de secrets partiels est décrit par exemple dans le document « How to share a secret », Communications of the ACM, 22 - 1979 » aux pages 612 à 613, appliqué à une clé secrète de cryptographie symétrique.

A titre d'exemple, un schéma cryptographique à seuil est décrit dans le document "Efficient threshold signature, multi-signature and blind signature scheme based on the Gap-Diffie-Hellman group signature, A. Boldyreva, IACR eCrypt, August 2002 » et encore dans le document "Short signatures from the Weil Pairing, Dan Boneh, Ben Lynn and Hovav Shacham, ASIACRYPT 2001, LNCS 2248 » aux pages 514 à 532. Le cardinal de l'ensemble 131 des informations partielles doit être supérieur ou égal au seuil K choisi.

Par exemple selon la première modalité, si la clé publique 111 a une taille de 512 bits, et que la valeur de seuil K est choisie égale à 4, l'ensemble 131 comprendra au moins quatre clés partielles ayant chacune une taille légèrement supérieure à 128 bits. Chaque clé partielle comporte un fragment d'information 133 de la clé publique 111. Chaque clé partielle est construite de sorte que la connaissance d'un nombre i de clés partielles, le nombre i étant supérieure ou égale à la valeur de seuil K, permet de reconstituer la clé publique 111. Dans un mode particulier de réalisation de la troisième étape 130, chaque clé partielle peut comporter, outre le fragment d'information 133, des informations supplémentaires 134. Par exemple, les informations supplémentaires 134 peuvent être des données redondantes utilisées pour un canal de transmission (TRANSEC), permettant notamment de détecter et de supprimer des erreurs de transmission.

Par exemple selon la seconde modalité, un ensemble 131 de signatures partielles est généré conformément au schéma de cryptographie à seuil choisi, utilisant la clé privée 112.

Dans une quatrième étape 140 du procédé selon l'invention, sur une période T donnée, chaque information partielle 132 est diffusée séparément dans un message MSG distinct.

Dans la première modalité, chaque message MSG comprenant en outre une signature 133 d'au moins une partie dudit message MSG produite à l'aide de la clé privée 112. Dans cette première modalité, la signature 133 est liée à au moins une partie dudit message MSG.

Dans la seconde modalité, l'information partielle 132 diffusée dans un message concerne une partie de signature 133 d'un schéma cryptographique à seuil associée à des données du système émettant les messages et produite à l'aide de la clé privée 112. Dans cette seconde modalité, la signature 133 est liée au système et/ou éventuellement à au moins une partie dudit message MSG qui est commune à l'ensemble des messages durant une période T (par exemple un horodatage commun de transmission simultanée desdits messages MSG distincts).

Dans une troisième modalité mettant en oeuvre deux schéma de cryptographie à seuil (par exemple selon une première modalité, un schéma de partage de secret appliqué à une clé 111 et selon une seconde modalité un schéma de signature cryptographique à seuil appliquée à une signature 133), les premières et secondes modalités sont mises en oeuvre dans le système pour transmettre une clé publique 111 et pour transmettre une signature 133 produite à l'aide de la clé privée 112.

Bien évidemment, chaque message MSG, et donc l'information partielle 132 qu'il comporte, peut être diffusé :
√ encapsulé ou non dans tout type de trames ;
√ en clair ou bien dans une forme encodée à des fins de cryptage
   et/ou de compression et/ou de correction d'erreurs.

Le procédé d'émission selon l'invention permet notamment de répartir la diffusion de chaque information partielle 132 sur plusieurs canaux de transmission. Un avantage est alors que la quantité d'information transmise par canal de transmission est inférieure avec une clé partielle à celle nécessaire dans l'art antérieur, tout en permettant la reconstruction de la clé à partir des différentes clés partielles. Les messages MSG distincts peuvent être transmis séquentiellement via un canal de transmission (tel qu'un canal de radiodiffusion), et/ou transmis simultanément via différents canaux de transmission (par exemple par accès multiple fréquentiel ou accès multiple par codes d'étalement, par exemple un multiplexage CDMA), et/ou une combinaison des cas précédents. Ces transmissions de messages sont connues par l'homme du métier, par référence par exemple à la spécification d'interface « GALILEO Signal-In-Space Interface Control Document (Galileo SISICD) ».

La figure 1b illustre, par un synoptique, un procédé selon l'invention de vérification de l'authenticité d'un système ayant émis des messages susceptibles d'être obtenus par le procédé d'émission selon l'invention. Les éléments déjà référencés sur les autres figures portent les mêmes références. Le procédé de vérification selon l'invention comporte une cinquième étape 150 de réception des messages MSG. Les messages MSG comportent les informations partielles 132 (ainsi que la signature 133 du message MSG selon la première modalité). Ainsi, il est possible que l'ensemble 131 d'informations partielles 132 ne soit pas intégralement reçu, mais seulement un nombre j d'informations partielles 132. Le procédé de vérification selon l'invention comporte une sixième étape 160 au cours de laquelle l'information agrégée et complète - à savoir la clé publique 111 dans la première modalité, la signature du système dans la seconde modalité - est reconstituée à partir du nombre j d'information partielles 132 reçues au cours de la cinquième étape 150. Cette sixième étape 160 ne peut aboutir que si le nombre j d'informations partielles 132 est supérieur ou égale à la valeur de seuil K. Dans le cas contraire, la sixième étape 160 échoue et il n'est alors pas possible de garantir l'authenticité et l'intégrité des messages MSG reçus. Le procédé de vérification selon l'invention comporte une septième étape 170 du procédé selon l'invention, s'il a été possible de reconstituer au cours de la sixième étape 160 l'information agrégée et complète - à savoir la clé publique 111 dans la première modalité, la signature du système dans la seconde modalité -, au cours de laquelle chaque signature 133 est vérifiée à l'aide de la clé publique 111 - reconstituée dans la première modalité, supposée préalablement connue dans la seconde modalité.

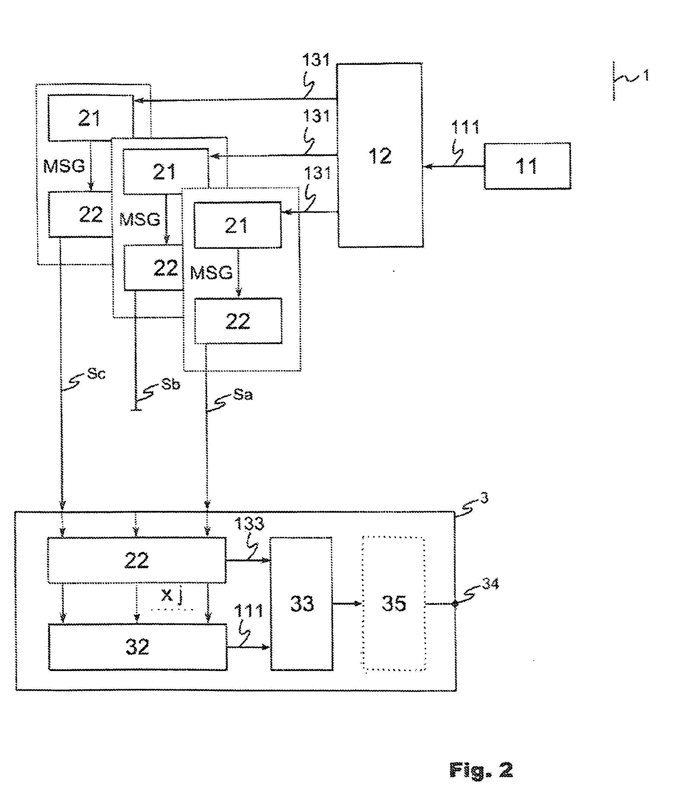

La figure 2 illustre par un synoptique un système comportant des dispositifs d'émission selon l'invention et un dispositif selon l'invention de vérification de l'authenticité d'un système ayant émis des messages. Les éléments déjà référencés sur les autres figures portent les mêmes références.

Le système 1 selon l'invention comporte des dispositifs d'émission 2 selon l'invention émettant des signaux S. Sur la figure 2, sont représentés trois émetteurs désignés respectivement par les références 2a, 2b, 2c, chacun émettant respectivement les signaux Sₐ, S_{b} et S_{c}. Les dispositifs d'émission 2 ne sont pas nécessairement situés dans une même zone géographique. Les signaux S ne véhiculent pas nécessairement les mêmes informations. Le système selon l'invention comporte au moins un dispositif selon l'invention de vérification de l'authenticité 3 selon l'invention. Dans son mode de fonctionnement nominal, le dispositif selon l'invention de vérification de l'authenticité 3 doit recevoir, sur une période T donnée, un nombre de signaux S au moins égal à la valeur de seuil K. Par exemple, si la valeur de seuil K est égale à 2, il devra recevoir, sur une période donnée, au moins deux signaux S parmi les signaux Sₐ, S_{b} et S_{c}.

Le système selon l'invention peut comporter des moyens de génération de clés cryptographiques 11. Les moyens de génération de clés cryptographiques 11 permettent notamment de générer un couple de clé publique 111 et de clé privée 112. Les moyens de génération de clés cryptographiques 11 sont donc adaptés à la mise en oeuvre de la première étape 110 du procédé d'émission selon l'invention. Le système selon l'invention peut comporter des moyens de génération d'informations partielles 12 adaptés à la mise en oeuvre de la deuxième étape 120 et de la troisième étape 130 du procédé d'émission selon l'invention. Les moyens de génération d'informations partielles 12 peuvent être centralisés ou alternativement compris dans chaque dispositif d'émission 2. Les moyens de génération d'informations partielles 12 agissent en coopération avec les moyens de génération de clés cryptographiques 11. Ainsi, selon une première modalité, les moyens de génération d'informations partielles 12 génèrent à partir de la clé publique 111 l'ensemble 131 de clés partielles. Pour cela, les moyens de génération de clés partielles 12 mettent en oeuvre un schéma cryptographique à seuil donné. L'ensemble 131 comporte un nombre P de clés partielles. Typiquement, le nombre P est égal au nombre de signaux S, soit trois dans l'exemple de la figure 2. Cependant, selon notamment la configuration du système, le nombre P peut être inférieur au nombre de signaux S si certaines clés partielles sont associées à plusieurs signaux S. Le nombre P peut aussi être supérieur au nombre de signaux S si l'on souhaite par exemple qu'un récepteur 3 doivent recevoir pour un même signal S plusieurs clés partielles sur une période T donnée pour reconstituer la clé publique 111.

Chaque dispositif d'émission 2 comporte lui-même des moyens de construction 21 de message MSG et des moyens de diffusion 22 desdits messages MSG. Les messages MSG sont diffusés, via les signaux S, par exemple à destination du dispositif selon l'invention de vérification de l'authenticité 3. Pour une période T donnée, chaque message MSG comporte par exemple des informations communes à tous les dispositifs d'émission 2, des informations spécifiques à chaque dispositif d'émission 2 à l'origine dudit message, une ou plusieurs informations partielles 132 associées au dispositif d'émission 2. Selon une première modalité, chaque message MSG comporte en outre une signature 133 portant sur tout ou partie du message. Selon une seconde modalité, la ou les informations partielles 132 portées par le message MSG portent, par exemple, sur une signature 133 d'informations du système. Chaque information partielle 132 est associée à un dispositif d'émission 2 du système, voire éventuellement à plusieurs dispositifs d'émission 2 s'il est possible de s'assurer par ailleurs qu'un nombre supérieur ou égal à la valeur seuil K de clés partielles pourra être reçu par chaque dispositif de vérification 3 compris dans le système selon l'invention. Alternativement, chaque message MSG peut contenir une partie seulement de la signature 133, l'ensemble de la signature 133 étant transmis en plusieurs messages MSG au cours de la période T.

Chaque dispositif selon l'invention de vérification 3 comprend au moins des moyens de décodage 31 de message MSG. Les moyens de décodage 31 sont notamment adaptés au décodage des messages MSG. En particulier, les moyens de décodage 31 permettent d'extraire de chaque message MSG les informations communes, les informations spécifiques au dispositif d'émission à l'origine dudit message MSG, les clés partielles 132 compris dans le message MSG et la signature 133. Si la signature 133 n'est pas intégralement transmise dans un même message MSG, les moyens de décodage 31 regroupent les fragments liés à la signature SIGN reçus dans plusieurs messages et reconstitue la signature SIGN complète par agrégation ou interpolation à partir de ces fragments. Les moyens de décodage 31 reçoivent et traitent tous les messages MSG compris dans tous les signaux S que le dispositif selon l'invention de vérification 3 peut recevoir au cours de la période T donnée. Chaque dispositif selon l'invention de vérification 3 comporte des moyens de reconstruction 32 de l'information agrégée et complète (à savoir la clé publique 111 dans une première modalité, la signature système dans une seconde modalité) coopérants avec les moyens de décodage 31 des messages MSG. Les moyens de reconstruction 32 reçoivent les informations partielles 132 extraites par les moyens de traitement 31. Au cours de la période T, les moyens de reconstruction 32 combinent les informations de chaque information partielle 132 ainsi reçus pour générer l'information agrégée et complète (la clé publique 111 ou la signature système). Les moyens de reconstruction 32 mettent en oeuvre pour cela le schéma cryptographique à seuil réciproque de celui utilisé pour générer les informations partielles 132. Dans la première modalité, il peut s'agir d'une méthode d'interpolation ; dans la seconde modalité, il peut s'agir des moyens définis dans le schéma de signature à seuil . Les moyens de reconstruction 32 ne peuvent accomplir cette tâche que si le nombre d'informations partielles 132 est supérieur ou égale à la valeur seuil K.

Chaque dispositif selon l'invention de vérification 3 comporte des moyens de validation 33 de chaque signature 133 couplés aux moyens de reconstruction 32 qui leur transmettent la clé publique 111. Les moyens de validation 33 de chaque signature 133 sont aussi couplés aux moyens de décodage 31 qui leur transmettent notamment les informations communes, les informations spécifiques au dispositif d'émission 2 à l'origine dudit message MSG et chaque signature 133. Les moyens de validation 33 vérifient alors à l'aide la clé publique 111 que chaque signature 133 est valide. Si la signature 133 est valide, les moyens de validation 33 délivrent une information garantissant que les signaux S reçus sont considérés comme émis par un ensemble de dispositif d'émission 2 de confiance. Si la signature 133 n'est pas valide, ou si la signature 133 ne peut être vérifiée, notamment parce qu'il n'a pas été possible aux moyens de reconstruction 32 de fournir la clé publique 111, les moyens de validation 33 délivrent une information indiquant qu'il n'est pas possible de garantir que les signaux S reçus ont été émis par des dispositif d'émission 2 de confiance. Chaque dispositif selon l'invention de vérification 3 peut en outre comprendre des moyens de construction 35 de message applicatif MSG_APPLI et une interface applicative 34 par laquelle les moyens de construction 34 délivre le message applicatif MSG_APPLI si les moyens de validation 33 ont fourni une information garantissant que les signaux S reçus sont considérés comme émis par des émetteurs 2 de confiance.

Dans un premier mode de réalisation, le message MSG_APPLI est construit à partir des informations obtenues à l'issue du traitement de l'ensemble des signaux S reçus (comme par exemple des informations de position/vitesse/temps obtenues par traitement d'au moins quatre signaux S dans un système de radionavigation), la signature 133 de ces informations ainsi que, optionnellement, la clé publique 111, afin de former un certificat vérifiable.

Dans un deuxième mode de réalisation, le message MSG_APPLI est construit à partir des informations obtenues à l'issue du traitement de l'ensemble des signaux S reçus, la signature 133, la clé publique 111 et une signature agrégée SIGN_APPLI obtenue à partir de la signature SIGN, de la clé publique 111 et d'une clé privée 35 propre à chaque dispositif selon l'invention de vérification 3. Les signatures agrégées sont bien connues de l'homme du métier, une telle signature étant par exemple décrite dans le document "Aggregate and verifiably encrypted signatures from bilinear maps, D. Boneh, C.Gentry, B.Lynn, H. Shachan, Proceeding of EUROCRYPT 2003, LNCS-2656 » pages 416 à 432ou encore dans le document "Batch verification of short signatures, J. Camensich, S. Hohenberger, M.O. Pedersen, EUROCRYPT 2007, LNCS 4515 » aux pages 246 à 263.

Le système selon l'invention peut être un système radio mettant en oeuvre des moyens terrestres et/ou satellitaires, incluant notamment un système de positionnement en intérieur. Le système selon l'invention peut aussi être utilisé comme système global de navigation par satellite, plus couramment désigné par l'acronyme anglo-saxon « GNSS » pour « Global Navigation Satellite Systems », plus particulièrement un système GALILEO utilisant le service européen de navigation par recouvrement géostationnaire (ou en anglais « EGNOS » pour « European Geostationary Navigation Overlay Service »). Dans un tel cas, la valeur de seuil K est typiquement au moins égale à 4 si les signaux S proviennent de moyens satellitaires. La valeur de seuil K peut par exemple être choisie de sorte à être inférieure à la moitié du nombre de satellites composant la constellation.

## Revendications

1. Procédé d'émission de messages (MSG) pour garantir l'authenticité d'un système de radionavigation par satellites comportant des dispositifs d'émission ayant émis lesdits messages (MSG), ledit procédé étant **caractérisé en ce qu'**il comporte en outre :
√ une deuxième étape (120) de choix d'une valeur de seuil (K) supérieure ou égale à 1 ;
√ une troisième étape (130) de génération d'un ensemble (131) d'informations partielles (132) de sorte que la connaissance d'un nombre i d'informations partielles (132) supérieur ou égal à la valeur de seuil (K) permette de vérifier une signature (133) d'une partie au moins des messages (MSG) ;
√ une quatrième étape (140) de diffusion de chaque information partielle (132) séparément dans un des messages (MSG) distinct.

2. Procédé selon la revendication 1 **caractérisé en ce que** ladite valeur de seuil (K) est au moins égale à 4.

3. Procédé selon la revendication 1 ou la revendication 2, dans lequel les informations partielles (132) sont des clés partielles générées de sorte que la connaissance d'un nombre i de clés partielles supérieur ou égal à la valeur de seuil (K) permette de reconstituer une clé publique (111), la signature (133) étant produite pour être vérifiable en relation avec ladite clé publique (111), chaque message (MSG) comprenant la signature (133) d'au moins une partie dudit message (MSG).

4. Procédé selon la revendication 1 ou la revendication 2, dans lequel les informations partielles (132) sont des parties de la signature (133) de sorte que la connaissance d'un nombre i de parties de la signature (133) supérieur ou égal à la valeur de seuil (K) permette de reconstituer la signature (133), la signature (133) étant liée au système et/ou à au moins une partie des messages (MSG) commune à l'ensemble des messages (MSG) durant une période donnée.

5. Procédé selon l'une quelconque des revendications 1 à 4, chaque information partielle (132) comportant des données redondantes (134) pour détecter et/ou supprimer des erreurs de transmission.

6. Procédé de vérification de l'authenticité d'un système ayant émis des messages (MSG) obtenus par le procédé selon l'une quelconque des revendications 1 à 5, **caractérisé en ce qu'**il comporte :
• une cinquième étape (150) de réception des messages (MSG) comprenant des informations partielles (132);
• une sixième étape (160) de reconstruction, à partir du nombre j d'informations partielles (132) reçues au cours de la cinquième étape (150), des informations permettant de vérifier une signature (133) d'une partie au moins des messages (MSG) ;
• si la sixième étape (160) a pu être réalisée, une septième étape (170) de vérification de la signature (133) des messages (MSG).

7. Dispositif d'émission (2) apte à la mise en oeuvre du procédé selon l'une quelconque des revendications 1 à 5 **caractérisé en ce qu'**il comporte des moyens de construction (21) et de diffusion (22) desdits messages (MSG), chaque message (MSG) comportant au moins ladite information partielle (132) d'un ensemble (131) généré de sorte que la connaissance dudit nombre i d'informations partielles (132) supérieur ou égal à une valeur de seuil (K) permette de vérifier ladite signature (133) d'une partie au moins des messages (MSG).

8. Dispositif selon la revendication 7, dans lequel les informations partielles (132) sont des clés partielles dont la connaissance du nombre i supérieur ou égal à la valeur de seuil (K) permet de reconstituer une clé publique (111), la signature (133) étant vérifiable en relation avec ladite clé publique (111), chaque message (MSG) comprenant la signature (133) d'au moins une partie dudit message (MSG).

9. Dispositif selon la revendication 7, dans lequel les informations partielles (132) sont des parties de la signature (133) dont la connaissance du nombre i supérieur ou égal à la valeur de seuil (K permet de reconstituer la signature (133), la signature (133) étant liée au système et/ou à au moins une partie des messages (MSG) commune à l'ensemble des messages (MSG) durant une période donnée.

10. Dispositif de vérification (3) de l'authenticité d'un système apte à la mise en oeuvre du procédé selon la revendication 6 **caractérisé en ce qu'**il comporte :
• des moyens de décodage (31) adaptés à recevoir des messages (MSG) et à extraire desdits messages (MSG) reçus des informations partielles (132) ;
• des moyens de reconstruction (32), à partir d'informations partielles (132), des informations permettant de vérifier au moins ladite signature (133) d'une partie au moins des messages (MSG) ;
• des moyens de validation (33) adapté à la vérification de la validité de chaque signature (133) extraite en regard des messages (MSG) reçus.

## Claims

1. A method for transmitting messages (MSG) to guarantee the authenticity of a satellite radio navigation system comprising transmission devices having transmitted said messages (MSG), said method being **characterised in that** it further comprises:
- a second step (120) of selecting a threshold value (K) greater than or equal to 1;
- a third step (130) of generating a set (131) of partial information items (132) in such a way that the knowledge of a number i of partial information items (132) greater than or equal to the threshold value (K) makes it possible to verify a signature (133) of at least some of the messages (MSG); and
- a fourth step (140) of sending each partial information item (132) separately in one of the distinct messages (MSG).

2. The method according to claim 1, **characterised in that** said threshold value (K) is at least equal to 4.

3. The method according to either claim 1 or claim 2, wherein the partial information items (132) are partial keys generated in such a way that the knowledge of a number i of partial keys greater than or equal to the threshold value (K) makes it possible to reconstruct a public key (111), the signature (133) being produced to be verifiable in relation to said public key (111), each message (MSG) comprising the signature (133) of at least part of said message (MSG).

4. The method according to either claim 1 or claim 2, wherein the partial information items (132) are parts of the signature (133), such that the knowledge of a number i of parts of the signature (133) greater than or equal to the threshold value (K) makes it possible to reconstruct the signature (133), the signature (133) being linked to the system and/or to at least some of the messages (MSG) common to the set of messages (MSG) over a given period.

5. The method according to any one of claims 1 to 4, each partial information item (132) comprising redundant data (134) to detect and/or remove transmission errors.

6. A method for verifying the authenticity of a system having transmitted messages (MSG) obtained by the method according to any one of claims 1 to 5, **characterised in that** said method comprises:
- a fifth step (150) of receiving messages (MSG) comprising partial information items (132);
- a sixth step (160) of using the number j of partial information items (132) received during the course of the fifth step (150) to reconstruct information items, enabling a signature (133) of at least some of the messages (MSG) to be verified; and
- if it has been possible to perform the sixth step (160), a seventh step (170) of verifying the signature (133) of the messages (MSG).

7. A transmission device (2) able to implement the method according to any one of claims 1 to 5, **characterised in that** it comprises means (21) for constructing and means (22) for sending messages (MSG), each message (MSG) comprising at least said partial information item (132) of a set (131) generated in such a way that the knowledge of said number i of partial information items (132) greater than or equal to a threshold value (K) makes it possible to verify said signature (133) of at least some of the messages (MSG).

8. The device according to claim 7, wherein the partial information items (132) are partial keys of which the knowledge of the number i greater than or equal to the threshold value (K) makes it possible to reconstruct a public key (111), the signature (133) being verifiable in relation to said public key (111), each message (MSG) comprising the signature (133) of at least part of said message (MSG).

9. The device according to claim 7, wherein the partial information items (132) are parts of the signature (133) of which the knowledge of the number i greater than or equal to the threshold value (K) makes it possible to reconstruct the signature (133), the signature (133) being linked to the system and/or to at least some of the messages (MSG) common to the set of messages (MSG) over a given period.

10. A device (3) for verifying the authenticity of a system able to implement the method according to claim 6, **characterised in that** said device comprises:
- decoding means (31) adapted to receive messages (MSG) and extract partial information items (132) from said received messages (MSG);
- means (32) for reconstructing, from partial information items (132), information making it possible to verify at least said signature (133) of at least some of the messages (MSG);
- validation means (33) adapted to verify the validity of each signature (133) extracted in relation to received messages (MSG).

## Patentansprüche

1. Verfahren zum Senden von Nachrichten (MSG) zum Gewährleisten der Echtheit eines Satellitenfunknavigationssystems, das Sendevorrichtungen umfasst, die die Nachrichten (MSG) gesendet haben, wobei das Verfahren **dadurch gekennzeichnet ist, dass** es ferner Folgendes umfasst:
- einen zweiten Schritt (120) der Auswahl eines Schwellenwerts (K) der größer als oder gleich 1 ist;
- einen dritten Schritt (130) der Generierung einer Menge (131) von Teilinformationen (132) derart, dass die Kenntnis einer Anzahl i von Teilinformationen (132), die größer als oder gleich dem Schwellenwert (K) ist, das Überprüfen einer Signatur (133) von zumindest einem Teil der Nachrichten (MSG) ermöglicht;
- einen vierten Schritt (140) der getrennten Verbreitung jeder Teilinformation (132) in einer der individuellen Nachrichten (MSG).

2. Verfahren nach Anspruch 1, **dadurch gekennzeichnet, dass** der Schwellenwert (K) mindestens gleich 4 ist.

3. Verfahren nach Anspruch 1 oder Anspruch 2, wobei die Teilinformationen (132) Teilschlüssel sind, die derart generiert werden, dass die Kenntnis einer Anzahl i von Teilschlüsseln, die größer als oder gleich dem Schwellenwert (K) ist, das Rekonstruieren eines öffentlichen Schlüssels (111) ermöglicht, wobei die Signatur (133) erzeugt wird, um in Verbindung mit dem öffentlichen Schlüssel (111) überprüfbar zu sein, wobei jede Nachricht (MSG) die Signatur (133) von mindestens einem Teil der Nachricht (MSG) umfasst.

4. Verfahren nach Anspruch 1 oder Anspruch 2, wobei die Teilinformationen (132) Teile der Signatur (133) sind, derart, dass die Kenntnis einer Anzahl i von Teilen der Signatur (133), die größer als oder gleich dem Schwellenwert (K) ist, das Rekonstruieren der Signatur (133) ermöglicht, wobei die Signatur (133) mit dem System und/oder mit mindestens einem Teil der Nachrichten (MSG) verbunden ist, der der Menge von Nachrichten (MSG) während eines gegebenen Zeitraums gemein ist.

5. Verfahren nach einem der Ansprüche 1 bis 4, wobei jede Teilinformation (132) redundante Daten (134) umfasst, um Übermittlungsfehler zu ermitteln und/oder zu beseitigen.

6. Verfahren zur Überprüfung der Echtheit eines Systems, das Nachrichten (MSG) gesendet hat, die durch das Verfahren nach einem der Ansprüche 1 bis 5 erhalten wurden, **dadurch gekennzeichnet, dass** es Folgendes umfasst:
- einen fünften Schritt (150) des Empfangs der Nachrichten (MSG), die Teilinformationen (132) umfassen;
- einen sechsten Schritt (160) der Rekonstruktion der Informationen, die das Überprüfen einer Signatur (133) von zumindest einem Teil der Nachrichten (MSG) ermöglichen, ausgehend von der Anzahl j von Teilinformationen (132), die während des fünften Schritts (150) empfanden wurden;
- wenn der sechste Schritt (160) ausgeführt werden konnte, einen siebten Schritt (170) der Überprüfung der Signatur (133) der Nachrichten (MSG).

7. Vorrichtung (2), die zum Einsatz des Verfahrens nach einem der Ansprüche 1 bis 5 geeignet ist, **dadurch gekennzeichnet, dass** sie Mittel zum Aufbau (21) und zur Verbreitung (22) der Nachrichten (MSG) umfasst, wobei jede Nachricht (MSG) mindestens die Teilinformation (132) einer Menge (131) umfasst, die derart generiert ist, dass die Kenntnis der Anzahl von Teilinformationen (132), die größer als oder gleich einem Schwellenwert (K) ist, das Überprüfen der Signatur (133) von zumindest einem Teil der Nachrichten (MSG) ermöglicht.

8. Vorrichtung nach Anspruch 7, wobei die Teilinformationen (132) Teilschlüssel sind, deren Kenntnis der Anzahl i, die größer als oder gleich dem Schwellenwert (K) ist, das Rekonstruieren eines öffentlichen Schlüssels (111) ermöglicht, wobei die Signatur (133) in Verbindung mit dem öffentlichen Schlüssel (111) überprüfbar ist, wobei jede Nachricht (MSG) die Signatur (133) von mindestens einem Teil der Nachricht (MSG) umfasst.

9. Vorrichtung nach Anspruch 7, wobei die Teilinformationen (132) Teile der Signatur (133) sind, deren Kenntnis der Anzahl i, die größer als oder gleich dem Schwellenwert (K) ist, das Rekonstruieren der Signatur (133) ermöglicht, wobei die Signatur (133) mit dem System und/oder zumindest einem Teil der Nachrichten (MSG) verbunden ist, der der Menge der Nachrichten (MSG) während eines gegebenen Zeitraums gemein ist.

10. Vorrichtung (3) zur Überprüfung der Echtheit eines Systems, die zum Einsatz des Verfahrens nach Anspruch 6 geeignet ist, **dadurch gekennzeichnet, dass** sie Folgendes umfasst:
- Dekcdierungsmittel (31), die angepasst sind, um Nachrichten (MSG) zu empfangen und von den empfangenen Nachrichten (MSG) Teilinformationen (132) auszulesen;
- Mittel (32) zum Rekonstruieren der Informationen, die das Überprüfen von mindestens der Signatur (133) von mindestens einem Teil der Nachrichten (MSG) ausgehend von Teilinformationen (132) ermöglichen;
- Mittel zur Datenriahtigkeitsübarprüfung (33), die an die Überprüfung der Gültigkeit jeder ausgelesenen Signatur (133) im Vergleich zu den empfangenen Nachrichten (MSG) angepasst sind.
